(19) Europäisches Patentamt
European Patent Office
Office européen des brevets

(11) **EP 1 253 492 B1**

(12) **EUROPÄISCHE PATENTSCHRIFT**

(45) Veröffentlichungstag und Bekanntmachung des Hinweises auf die Patenterteilung:
**18.10.2006   Patentblatt 2006/42**

(51) Int Cl.:
***G05B 13/02*** *(2006.01)*    ***G05B 17/02*** *(2006.01)*

(21) Anmeldenummer: **02008142.8**

(22) Anmeldetag: **12.04.2002**

(54) **Hybridmodell und Verfahren zur Bestimmung von Eigenschaften hinsichtlich der Herstellung eines Spritzgiessformteils**

Hybrid model and method for determining the properties related to the production of an injection moulded article

Modèle hybride et procédé pour la détermination des propriétés concernant la préparation d'un article moulé par injection

(84) Benannte Vertragsstaaten:
**AT BE CH CY DE DK ES FI FR GB GR IE IT LI LU MC NL PT SE TR**

(30) Priorität: **25.04.2001   DE 10120476**

(43) Veröffentlichungstag der Anmeldung:
**30.10.2002   Patentblatt 2002/44**

(73) Patentinhaber: **Bayer MaterialScience AG
51368 Leverkusen (DE)**

(72) Erfinder:
 • **Salewski, Klaus
   47802 Krefeld (DE)**
 • **Mrziglod, Thomas, Dr.
   51467 Bergisch Gladbach (DE)**
 • **Wanders, Martin, Dr.
   51519 Odenthal (DE)**
 • **Loosen, Roland, Dr.
   50374 Erftstadt (DE)**
 • **Flecke, Jürgen, Dr.
   41542 Dormagen (DE)**
 • **Sarabi, Bahman, Dr.
   47803 Krefeld (DE)**

(56) Entgegenhaltungen:
DE-A- 19 514 535          DE-A- 19 743 600
US-A- 5 434 783           US-A- 5 673 368
US-A- 5 796 920           US-A- 5 914 884
US-A- 6 047 221

 • **PSICHOGIOS D C ET AL: "PROCESS MODELING USING STRUCTURED NEURAL NETWORKS" PROCEEDINGS OF THE AMERICAN CONTROL CONFERENCE (ACC). CHICAGO, JUNE 24 - 26, 1992, NEW YORK, IEEE, US, Bd. 3, 24. Juni 1992 (1992-06-24), Seiten 1917-1921, XP000343627 ISBN: 0-7803-0210-9**
 • **SMITH J ET AL: "An artificial neural network model of certain aspects of fighter pilot cognition" DECISION AIDING FOR COMPLEX SYSTEMS. CHARLOTTESVILLE, VA., OCT. 13 - 16, 1991, PROCEEDINGS OF THE INTERNATIONAL CONFERENCE ON SYSTEMS, MAN AND CYBERNETICS, NEW YORK, IEEE, US, Bd. 1 _, 13. Oktober 1991 (1991-10-13), Seiten 1545-1550, XP010054640 ISBN: 0-7803-0233-8**

**Beschreibung**

Die Erfindung betrifft ein neuronales Netzwerk und ein Verfahren zur Bestimmung einer Eigenschaft hinsichtlich der Herstellung eines Spritzgießformteils.

Aus der US - A 5 914 884 ist ein Verfahren zur Bewertung der Eigenschaften eines Kunststoffmaterials in einem Kunststoffspritzverfahren bekannt. Ein empirisches Modell dient zur Beschreibung der Beziehung zwischen Prozessvariablen und einer Mehrzahl von Qualitätscharakteristiken. Das empirische Modell wird anhand von mittels eines Kunststoffspritzprozesses ermittelten empirischen Daten erstellt. Einer der Nachteile dieses Verfahrens besteht in den praktischen Schwierigkeiten und dem erforderlichen Aufwand für die Erstellung des empirischen Modells.

DE 19514535 A1 offenbart ein Verfahren zur Überwachung von Produkteigenschaften und Regelung eines Herstellprozesses, beispielsweise eines Spritzgusprozesses, mit Hilfe eines Prognosemodells, bei dem es sich sowohl um ein rigoroses Modell als auch um ein neuronales Netzwerk, womöglich sogar um ein nicht näher spezifiziertes Hybridmodell handelt. Weitere Details sind allerdings nicht offenbart, insbesondere keine Details über die tatsächlich verwendeten Modellkomponenten.

Psichogios et al. offenbaren in "Process modeling using structured neural networks" (Proceedings of the American Control Conference (ACC) Chicago, June 24-26, 1992, New York, IEEE, US, Bd. 3, 24.Juni 1992, s. 1917-1921) Prozessmodelle mit neuronalen Netzen und rigorosen Modellen in Kombination. Dabei bleibt die Anzahl und Anordnung der Komponenten sowie die Verteilung der Eingangsparameter auf dieselben allerdings unklar.

Der Erfindung liegt daher die Aufgabe zu Grunde, ein verbessertes Verfahren, mit neuronalem Netzwerk, zur Bestimmung einer Eigenschaft hinsichtlich der Herstellung eines Spritzgießformteils zu schaffen.

Die der Erfindung zu Grunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Die Erfindung erlaubt die Prognose verschiedener Eigenschaften hinsichtlich der Herstellung eines Spritzgießformteils und zwar sowohl hinsichtlich des Spritzgießverfahrens als auch hinsichtlich der Eigenschaften des resultierenden Spritzgießformteils.

Insbesondere ist die Prognose von Prozesszeiten und Verarbeitungseigenschaften beim Spritzgießen von Kunststoff-Formteilen von großer praktischer Bedeutung, da die Herstellungskosten von Spritzgießformteilen maßgeblich durch die Produktivität der Spritzgießfertigung beeinflusst werden. Der charakteristische Parameter ist hierbei die Prozesszeit der Spritzgießmaschine für die Herstellung eines Formteils.

Eine Berechnung der Zykluszeit erfordert nicht nur eine Charakterisierung der materialspezifischen Eigenschaften durch den Rohstoffhersteller, sondern auch die Berücksichtigung des kundenspezifischen Anwendungsfalls. Die entsprechenden Zykluszeiten ergeben sich so aus dem Zusammenspiel von Materialeigenschaften, den Prozessparametern der Spritzgießmaschine und der Konstruktion des Spritzgießwerkzeugs.

Diese komplexen Zusammenhänge können mit Hilfe von neuronalen Netzen abgebildet werden. Die neuronalen Netze werden durch rigorose Rechenmodelle ergänzt, die mit dem neuronalen Netz verschaltet werden. Beispielsweise kann die Berechnung der Plastifizierleistung unter Berücksichtigung der Schneckengeometrie der eingesetzten Spritzgießmaschine in einem solchen rigorosen Rechenmodell erfolgen.

Die umfassende Modellierung des Spritzgießprozesses ermöglicht über die Zykluszeitprognose hinaus eine Vielzahl von Aussagen über wichtige Qualitätsmerkmale des Spritzgießformteils. Unter Berücksichtigung der Prozessführung können beispielsweise die Maßhaltigkeit der Formteile, die Elastizitätsmodule, die Bruchspannungen und -dehnungen in Abhängigkeit von Fließrichtung und Wanddicke, die Wärmeformbeständigkeit und weitere Eigenschaften prognostiziert werden.

Ein besonderer Vorteil der Erfindung besteht darin, dass diese Prognosen über den Spritzgießprozess und/ oder die zu erwartenden Formteileigenschaften vom Anwender ohne Spezialkenntnisse realisierbar sind. Von besonderem Vorteil ist dabei der Einsatz der Erfindung für die Projektierung neuer Spritzgießanwendungen. Das erfindungsgemäße hybride neuronale Netzwerk erlaubt bereits in einer frühesten Planungsphase durch eine einfach durchführbare Computersimulation die Machbarkeit eines neuen Projekts zu prüfen. Dies ist insbesondere von großer Bedeutung für die Reduzierung der sogenannten "time to market" Phase.

Ferner erlaubt es die Erfindung zur rechnerischen Bauteilauslegung dem Konstrukteur die geeigneten Werkstoffkennwerte durch Prognose mittels des erfindungsgemäßen hybriden Modells zur Verfügung zu stellen. Aufgrund eines komplexen Materialverhaltens von Kunststoffen können solche Werkstoffkennwerte unerlässlich sein für eine sichere Bauteilauslegung. Die Erfindung erlaubt es, solche Werkstoffkennwerte ohne die Durchführung von Versuchsreihen oder dergleichen zu ermitteln.

Ferner erlaubt die Erfindung auch eine Prognose hinsichtlich der für ein gewünschtes Formteil erforderlichen Maschinen- und Prozessparameter der Kunststoffspritzgießmaschine. Damit läßt sich auch vorab prüfen, ob ein bestimmtes Teil auf einer vorhandenen Spritzgießmaschine überhaupt herstellbar ist.

Im Weiteren wird eine Ausführungsform der Erfindung mit Bezugnahme auf die Zeichnungen näher erläutert. Es zeigen:

Fig. 1    ein Blockdiagramm einer Ausführungsform des erfindungsgemäßen hybriden Modells,

Fig.2    eine Anwendung des hybriden neuronalen Netzes der Fig. 1,

Fig. 3    die Schritte zur Erzeugung einer Datenbank für das Training des neuronalen Netzes und

Fig. 4    das Training der in dem hybriden neuronalen Netz beinhalteten neuronalen Netze.

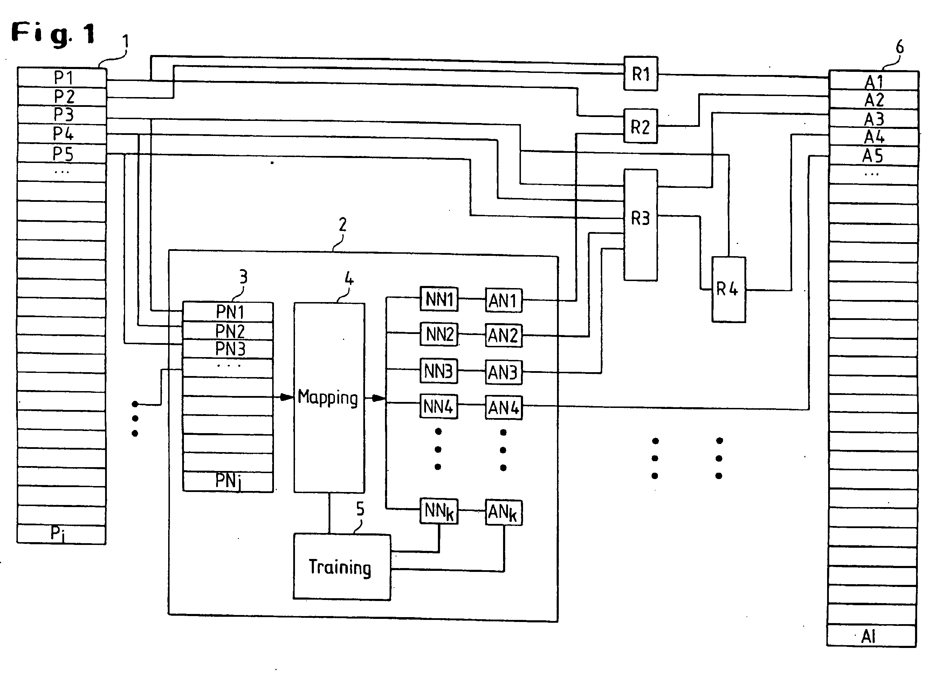

Das hybride neuronale Netz der Fig. 1 hat einen Eingang 1 zur Eingabe von Parametern P1, P2, P3... $P_i$. Bei diesen Parametern kann es sich um Stoff- oder Rezepturparameter handeln, beispielsweise zur Spezifizierung von aus Handelsprodukten zusammengesetzten Rezepturen, und/oder um Prozess- und Maschinenparameter hinsichtlich des Spritzgießvorgangs bzw. der Spritzgießmaschine und/oder um Konstruktions- und Formteilparameter, beispielsweise hinsichtlich der Wanddicke des Formteils und der Fließlänge.

In dem hier betrachteten Ausführungsbeispiel dient der Eingang 1 zur Eingabe unter anderem der nachfolgenden Parameter:

| Formteilparameter | Rezeptur | Prozessparameter | Maschinenparameter |
|---|---|---|---|
| | | | |
| Probendicke, Formteilvolumen, kundenspezifische Fülllänge ... | Pocan, Glasfaser, Makrolon, Zitronensäure, Paraloid, Talcum ... | Massetemperatur, Werkzeugtemperatur, Nachdruck | Schergeschwindigkeit, Einspritzgeschwindigkeit, Schneckendurchmesser, Gangsteigung der Meteringzone, Gangtiefe der Meteringzone, Kanalbreite der Meteringzone, Länge der Meteringzone, Staudruck, Schneckendrehzahl |

Ferner weist das hybride Modell ein neuronales Netzmodul 2 auf. Das neuronale Netzmodul 2 hat einen Eingang 3 zur Eingabe von Parametern PN1, PN2, PN3 ... $PN_j$. Der Eingang 3 ist mit dem Eingang 1 verbunden, so dass einige der Parameter P 1 bis $P_i$ des Eingangs 1 auch in den Eingang 3 des neuronalen Netzmoduls 2 eingegeben werden.

Aufgrund einer entsprechenden Verbindung zwischen dem Eingang 3 und dem Eingang 1 ist daher der Eingangsparameter PN1 des neuronalen Netzmoduls 2 identisch mit dem Parameter P3 des Eingangs 1 des hybriden Modells. Ebenso sind die Parameter PN2 und P4 sowie PN3 und P5 in dem gezeigten Beispiel identisch.

Die Parameter PN1 bis $PN_j$ bilden daher eine Teilmenge der Parameter P1 bis $P_i$. Die weiteren entsprechenden Verschaltungen zwischen dem Eingang 1 und dem Eingang 3 sind in der Fig. 1 der Übersichtlichkeit halber nicht im Detail dargestellt.

Der Eingang 3 des neuronalen Netzmoduls 2 ist mit einem Abbildungsmodul 4 verbunden. Das Abbildungsmodul 4 ist seinerseits mit den neuronalen Netzen NN1, NN2, NN3, NN4, ...$NN_k$ verbunden. Jedes der neuronalen Netze NN1 bis $NN_k$ hat einen entsprechenden Ausgang AN1 bis $AN_k$.

Jedes der neuronalen Netze NN1 bis $NN_k$ ist für die Prognose einer bestimmten Eigenschaft trainiert, die über den entsprechenden Ausgang ausgegeben wird, wenn an dem Eingang des betreffenden neuronalen Netzes die erforderlichen Eingangsparameter angelegt werden. Die Anzahl der erforderlichen Eingangsparameter kann dabei unterschiedlich sein.

Um die für ein bestimmtes neuronales Netz erforderlichen Eingangsparameter an den Eingang dieses Netzes anzulegen, führt das Abbildungsmodul 4 entsprechende Transformationen des aus den Parametern PN1 bis $PN_j$ bestehenden Parametervektors des Eingangs 3 aus. Wenn beispielsweise das neuronale Netz NN1 lediglich die Eingangsparameter PN1, PN2 und PN3 benötigt, nicht aber die weiteren Parameter PN4 bis $PN_j$, so sorgt das Abbildungsmodul 4 dafür, dass an dem Eingang des neuronalen Netzes NN1 lediglich die Parameter PN1 bis PN3 anstehen. Entsprechendes gilt für die weiteren neuronalen Netze. Die Abbildung oder "mapping" kann durch Multiplikation des Parametervektors des Eingangs 3 jeweils mit einer bestimmten auf das betreffende neuronale Netz angepasste Matrix durchgeführt werden.

Das neuronale Netzmodul 2 hat ferner ein Trainingsmodul 5, welches in einem Trainingsmodus des neuronalen Netzmoduls 2 aktiv ist. Das Trainingsmodul 5 ist mit dem Abbildungsmodul 4 und mit den neuronalen Netzen NN1 bis $NN_k$ sowie deren entsprechenden Ausgängen jeweils verbunden. Das Training der einzelnen neuronalen Netze kann dabei sequentiell erfolgen, dass heißt die einzelnen neuronalen Netze werden unabhängig voneinander durch Anlegen verschiedener Eingangsparameter unter Kontrolle des Trainingsmoduls 5 in an sich bekannter Art und Weise trainiert.

Dazu eignet sich beispielsweise das sogenannte back-propagation oder das Programm "NN-Tool 2000", welches kommerziell erhältlich ist von Professor Frank Bärmann, Fachhochschule Gelsenkirchen, Fachbereich physikalische Technik. Das entsprechende Trainingsverfahren ist auch in der Publikation "Neural Network", Volume 5, Seiten 139 bis 144, 1992, "On a class of efficient learning algorithms for neural networks", Frank Bärmann, Friedrich Biegler-König, beschrieben.

Das hybride neuronale Netz hat ferner eine Anzahl von rigorosen Modellen R1, R2, R3, R4,.... Bei den rigorosen Modellen handelt es sich um Teilmodelle, die sich mittels mathematischer Formeln darstellen lassen. Diejenigen Teile des Modells, für die sich solche mathematischen Formeln nicht angeben lassen, werden mittels des neuronalen Netzmoduls 2 erfasst. Die rigorosen Modelle können untereinander und mit dem neuronalen Netzmodul verschaltet sein.

In dem gezeigten Ausführungsbeispiel ist das rigorose Modell R1 lediglich mit dem Eingang 1, aber nicht mit anderen rigorosen Modellen oder einem Ausgang des neuronalen Netzmoduls 2 verbunden. Der Ausgang des rigorosen Modells R1 ist mit dem Ausgang A1 des Ausgangs 6 verbunden.

Das rigorose Modell R2 hingegen ist mit dem Parameter P1 des Eingangs 1 sowie mit dem Ausgang AN1 des neuronalen Netzmoduls 2 verbunden. Der Ausgang des rigorosen Modells R2 ist mit dem Ausgang A2 verbunden.

Das rigorose Modell R3 ist mit den Parametern P3, P4 und P5 des Eingangs 1 sowie mit den Ausgängen AN2 und AN3 des neuronalen Netzmoduls 2 verbunden. Der Ausgang des rigorosen Modells R3 ist sowohl mit dem Ausgang A3 als auch mit dem Eingang des rigorosen Modells R4 verbunden. Das rigorose Modell R4 hat einen weiteren Eingang, der mit dem Parameter P3 verbunden ist. Der Ausgang des rigorosen Modells R4 ist mit dem Ausgang A4 verbunden.

In dem betrachteten Ausführungsbeispiel kann es sich bei den Parametern PN1 bis $PN_j$ des Eingangs 3 um die Parameter Rezeptur, Dicke, Massetemperatur, Werkzeugtemperatur, Schergeschwindigkeit und Nachdruck handeln.

Bei den Ausgangsgrößen, die an den Ausgängen AN1 bis $AN_k$ anstehen, kann es sich entsprechend um die Größen Dichte, Siegelzeit, Siegeltemperatur, Entformungstemperatur, Normfülldruck, Nullviskosität, reziproke Übergangsschergeschwindigkeit, Carreausteigung und mechanische Eigenschaften handeln.

Mit den rigorosen Modellen können dann beispielsweise die Formteilmasse, die Formfüllzeit, die effektive Temperaturleitfähigkeit, die Kühlzeit, der Fülldruck, die Dosierzeit, die Zykluszeit sowie weitere mechanische Eigenschaften rechnerisch ermittelt werden.

Entsprechend stehen dann am Ausgang 6 beispielsweise die folgenden Werte zur Verfügung:

EP 1 253 492 B1

| Verarbeitungseigenschaften | mechanische Eigenschaften | thermische Eigenschaften | Zykluszeitprognose | rheologische Eigenschaften |
|---|---|---|---|---|
| | | | | |
| Fülldruck, Plastifizierleistung, Haftreibung, Gleitreibung, Schwindung | Elastizitätsmodul (längs, quer), Streckspannung, Streckdehnung, Reißspannung (längs, quer), Reißdehnung (längs, quer), Arbeit bis Streckspannung, Arbeit bis zum Bruch, nominelle Reißdehnung, Biegemodul, Biegespannung, Randfaserdehnung, Biegefestigkeit | Auswurftemperatur, Dichte, non-flow Temperatur, Formteilmasse | Siegelzeit, Zykluszeit, Formfüllzeit (Einspritzzeit), Dosierzeit, Kühlzeit | Schmelzeviskosität, Carreauparameter, Carreauschmelzeviskosität |

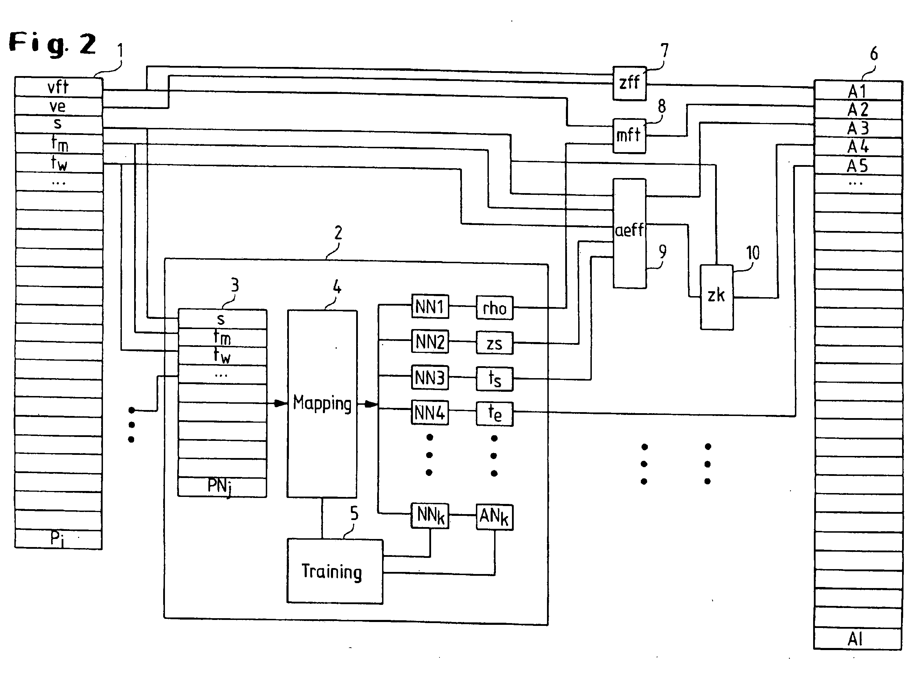

Die Fig. 2 zeigt einen Anwendungsfall des hybriden neuronalen Netzes der Fig. 1. In dem Eingang 1 sind die folgenden Parameter P1 bis P5 exemplarisch gezeigt:

vft =    Formteilvolumen
ve =    Einspritzgeschwindigkeit
s =    Dicke
$t_m$ =    Masse, Temperatur
$t_w$ =    Werkzeugtemperatur

Die weiteren Eingangsparameter des Eingangs 1 sind in der Fig. 2 der Einfachheit halber nicht dargestellt.
Die Parameter vft und ve gehen in das rigorose Modell 7 zur Berechnung der Formfüllzeit ein. In dem rigorosen Modell 7 ist dazu die folgende Formel hinterlegt:

$$zff = \left(\frac{vft}{0.85}\right) \cdot \frac{4}{(ve \cdot s^2 \cdot \pi)}$$

Die mit dem rigorosem Modell 7 berechnete Formfüllzeit zff wird über den Ausgang A1 ausgegeben.
In dem rigorosem Modell 8 zur Berechnung der Formteilmasse mft ist die folgende Formel hinterlegt:

$$mft = vft \cdot rho$$

Dementsprechend sind die Eingänge des rigorosen Modells 8 mit dem Parameter vft des Eingangs 1 bzw. mit dem Ausgang des neuronalen Netzes NN1 verknüpft. Der Ausgang des neuronalen Netzes NN1 liefert die Dichte rho. Aus dem Eingangsparameter vft bzw. den Prognosewert rho berechnet das rigorose Modell 8 dann die Formteilmasse mft, die über den Ausgang A2 ausgegeben wird.
Das rigorose Modell 9 dient zur Berechnung der effektiven Temperaturleitfähigkeit aeff. Zur Berechnung der effektiven Temperaturleitfähigkeit ist in dem rigorosem Modell 9 die folgende Formel hinterlegt:

$$aeff = \frac{s^2}{\pi^2 \cdot zs} \cdot \log\left(\frac{4}{\pi} \cdot \frac{t_m - t_w}{t_s - t_w}\right)$$

Entsprechend ist der Eingang des rigorosen Modells 9 mit den entsprechenden Parametern s, $t_m$ und $t_w$ des Eingangs 1 verbunden. Ferner ist der Eingang des rigorosen Modells 9 auch mit den Ausgängen der neuronalen Netze NN2 und NN3 verbunden, welche die Siegelzeit zs bzw. die Siegeltemperatur $t_s$ als Prognosewerte liefern. Die so ermittelte effektive Temperaturleitfähigkeit aeff wird über den Ausgang A3 von dem rigorosen Modell 9 ausgegeben.
Ferner wird die effektive Temperaturleitfähigkeit aeff auch von dem Ausgang des rigorosen Modells 9 einem Eingang des rigorosen Modells 10 zugeführt. Das rigorose Modell 10 dient zur Berechnung der Kühlzeit zk. Zur Berechnung der Kühlzeit ist in dem rigorosen Modell 10 die folgende Formel hinterlegt:

$$zk = \frac{s^2}{\pi^2 \cdot aeff} \cdot \log\left(\frac{4}{\pi} \cdot \frac{t_m - t_w}{t_e - t_w}\right)$$

Entsprechend hat des rigorose Modell 10 einen weiteren Eingang, der mit dem Parameter s des Eingangs 1 verbunden ist sowie weitere in der Fig. 2 der Übersichtlichkeit halber nicht gezeigte Eingänge, die mit den Eingabeparametern $t_m$ und $t_w$ sowie mit dem Prognosewert $t_e$ des Ausgangs des neuronalen Netzes NN4 verbunden sind. Die aufgrund dieser Eingabeparameter bzw. aufgrund des Prognosewerts und der effektiven Temperaturleitfähigkeit ermittelte Kühlzeit zk wird von dem rigorosen Modell 10 über den Ausgang A4 ausgegeben.

Das hybride neuronale Modell kann weitere rigorose Modelle z.B. für die Berechnung des Fülldrucks für den Anwendungsfall des Kunden, die Berechnung der Dosierzeit, der Prozesszeit sowie die Transformation bestimmter mechanischer Eigenschaften beinhalten. Diese weiteren rigorosen Teilmodelle sind der Übersichtlichkeit halber in der Fig. 2 nicht dargestellt. Entsprechende Berechnungsvorschriften für die Realisierung solcher weiterer rigoroser Teilmodelle sind beispielsweise der Publikation Anwendungstechnische Information 1104, "optimierte Werkzeugtemperierung", Olaf Zöllner, Bayer AG, Geschäftsbereich Kunststoffe, entnehmbar.

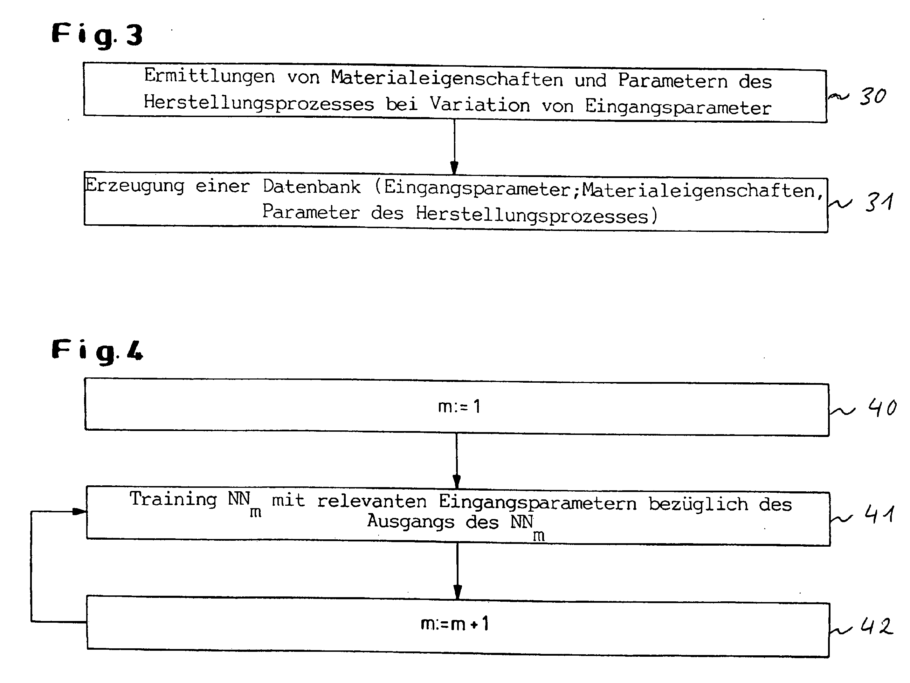

Die Fig. 3 zeigt den Ablauf für die Erzeugung einer Datenbank, zum Training der neuronalen Netze des Hybridmodells . Zunächst wird in dem Schritt 30 eine Serie von Versuchen durchgeführt, bei der unter Variation beispielsweise von Rezepturen und Spritzgießformen (Dicke) und Variationen von Prozess- und Maschinenparametern der Kunststoffspritzgießmaschine entsprechende Kunststoff- Formteile hergestellt werden, die danach einer Analyse unterzogen werden. In dem Schritt 31 wird aus den in dem Schritt 30 ermittelten Daten eine Datenbank erzeugt. Diese Datenbank beinhaltet pro Datensatz die Eingangsparameter, dass heißt, die jeweiligen Rezeptur- und Formparameter sowie die Prozess- und Maschinenparameter und die entsprechenden resultierenden Eigenschaften des hergestellten Kunststoffformteils, insbesondere dessen mechanischer Eigenschaften, sowie die Charakteristika des Herstellungsprozesses, also die Verarbeitungseigenschaften, thermischen Eigenschaften, rheologische Eigenschaften und die Zykluszeit.

Die Fig. 4 zeigt das Vorgehen zum Training der einzelnen neuronalen Netze des hybriden Modells. In dem Schritt 40 wird zunächst die Laufvariable m mit dem Wert 1 initialisiert.

In dem Schritt 41 wird das erste neuronale Netz NN1 trainiert. Dazu wird auf die Datenbank zugegriffen, um die zum Training des betreffenden neuronalen Netzes NN1 erforderlichen Eingangsparameter abzurufen. Der Ausgang des neuronalen Netzes NN1 - in dem Beispiel der Fig. 2 die Dichte - wird mit dem im Experiment ermittelten Wert verglichen. Bei einer Abweichung zwischen den prognostizierten und dem tatsächlichen Wert werden die Gewichtungen der Neuronen des neuronalen Netzes NN1 entsprechend angepasst, wie es an sich bekannt ist. Nachdem das Training des neuronalen Netzes NN1 in dem Schritt 41 abgeschlossen ist, wird die Laufvariable m in dem Schritt 42 inkrementiert und der Schritt 41 wird wiederholt so oft ausgeführt, bis alle neuronalen Netze $NN_m$ trainiert worden sind.

**Bezugszeichenliste**

| | |
|---|---|
| Eingang | 1 |
| neuronales Netz | 2 |
| Eingang | 3 |
| Abbildungsmodul | 4 |
| Trainingsmodul | 5 |
| Ausgang | 6 |
| rigoroses Model | 7 |
| rigoroses Model | 8 |
| rigoroses Model | 9 |
| rigoroses Model | 10 |

**Patentansprüche**

**1.** Hybridmodell zur Bestimmung von Eigenschaften hinsichtlich der Herstellung eines Spritzgießformteils mit

- einem ersten Eingang (1) zur Eingabe von Parametern,
- zumindest einem neuronalen Netz (NN1,...$NN_k$) zur Eingabe einer oder mehrerer der Parameter in das neuronale Netz und mit einem ersten Ausgang zur Ausgabe eines Prognosewerts,
- zumindest einem rigorosen Modell (R1, R2, R3; R4, R5,...)mit einem weiteren Eingang zur Eingabe von einem oder mehrerer Parameter und/oder des Prognosewerts und einem zweiten Ausgang zur Ausgabe eines berechneten Werts hinsichtlich der Eigenschaften,

**dadurch gekennzeichnet, dass** es mindestens ein zweites rigoroses Modell aufweist, wobei ein Eingang des zweiten rigorosen Modells mit zumindest einem Ausgang eines anderen rigorosen Modells zur Eingabe des berechneten Werts verbunden ist.

**2.** Hybridmodell nach Anspruch 1 mit einer Mehrzahl von neuronalen Netzen (NN1,...$NN_k$) zur Ausgabe einer entspre-

chenden Mehrzahl von Prognosewerten.

3. Hybridmodell nach Anspruch 1 oder 2 mit Mitteln zur Abbildung eines Eingangsvektors von Parametern (P1, P2, P3, P4, P5, ..., $P_i$) auf eine Teilmenge (PN1, PN2, PN3,...,$PN_j$) und mit Mitteln (4) zur Abbildung der Teilmenge auf entsprechende Eingänge der neuronalen Netze.

4. Hybridmodell nach Anspruch 1, 2 oder 3, bei dem es sich bei den Parametern um Formteilparameter, Rezepturparameter, Prozessparameter und /oder Maschinenparameter handelt.

5. Hybridmodell nach einem der vorhergehenden Ansprüche, bei dem der oder die Prognosewerte einen oder mehrere der folgenden Eigenschaften betreffen: Rheologische Eigenschaften, Verarbeitungseigenschaften, mechanische Eigenschaften, thermische Eigenschaften, Eigenschaften der Prozesszeit, wie z.B. Dosierzeit, Kühlzeit etc..

6. Hybridmodell nach einem der vorhergehenden Ansprüche, bei dem der oder die Ausgänge des oder der rigorosen Modelle eine oder mehrere der folgenden Eigenschaften betreffen: Rheologische Eigenschaften, Verarbeitungseigenschaften, mechanische Eigenschaften, thermische Eigenschaften, Eigenschaften der Prozesszeit.

7. Hybridmodell nach einem der vorhergehenden Ansprüche, bei dem das oder die neuronalen Netze einen oder mehrere der folgenden Prognosewerte ausgeben: Schmelzeviskosität, Carreauparameter, Fülldruck, Plastifizierleistung, Elastizitätsmodul, Streckspannung, Streckdehnung, Reißspannung, Reißdehnung, Arbeit bis Streckspannung, Arbeit bis zum Bruch, nominelle Reißdehnung, Haftreibung, Gleitreibung, Schwindung, Auswurftemperatur, Biegemodul, Biegespannung, Randfaserdehnung, Biegefestigkeit, Dichte, Siegeltemperatur, Formteilmasse.

8. Hybridmodell nach einem der vorhergehenden Ansprüche, bei dem das oder die rigorosen Modelle einen oder mehrere berechnete Werte hinsichtlich zumindest einer der folgenden Eigenschaften ausgeben: Zykluszeit, Formfüllzeit, Einspritzzeit, Dosierzeit, Kühlzeit, kundenspezifischer Fülldruck, Carreau-Schmelzeviskosität, effektiver Wärmeleitwert, Querelastizitätsmodul, Querreißspannung, Querreißdehnung.

9. Hybridmodell nach einem der vorhergehenden Ansprüche, mit einem rigorosen Modell zur Berechnung der Formfüllzeit aus dem Formteilvolumen und der Einspritzgeschwindigkeit.

10. Hybridmodell nach einem der vorhergehenden Ansprüche, mit einem rigorosen Modell zur Berechnung der Formteilmasse aus dem Formteilvolumen und der Dichte.

11. Hybridmodell nach einem der vorhergehenden Ansprüche, mit einem rigorosen Modell zur Berechnung der effektiven Temperaturleitfähigkeit aus der Dicke, der Siegelzeit, der Massetemperatur, der Werkzeugtemperatur, der Siegeltemperatur.

12. Hybridmodell nach einem der vorhergehenden Ansprüche, mit einem rigorosen Modell zur Berechnung der Kühlzeit aus der effektiven Temperaturleitfähigkeit, der Dicke, der Massetemperatur, der Werkzeugtemperatur, der Entformungstemperatur.

13. Verfahren zur Bestimmung einer Eigenschaft hinsichtlich der Herstellung eines Spritzgießformteils mit folgenden Schritten:

    - Auswahl einer Anzahl von Parametern,
    - Eingabe der Parameter in ein Hybridmodell nach einem der vorhergehenden Ansprüche und Ausgabe eines Prognosewerts und / oder eines berechneten Werts hinsichtlich zumindest der einen Eigenschaft.

**Claims**

1. Hybrid model for determining properties relating to the manufacture of an injection-moulded part, having

    - a first input (1) for inputting parameters,
    - at least one neural network (NN1, ...$NN_k$) for inputting one or more of the parameters into the neural network and having a first output for outputting a forecast value,
    - at least one rigorous model (R1, R2, R3, R4, R5,...) having a further input for inputting one or more parameters

EP 1 253 492 B1

and/or the forecast value, and a second output for outputting a calculated value relating to the properties,

**characterized in that** it has at least one second rigorous model, one input of the second rigorous model being connected to at least one output of another rigorous model in order to input the calculated value.

2. Hybrid model according to Claim 1, having a multiplicity of neural networks (NN1, ... $NN_k$) for outputting a corresponding multiplicity of forecast values.

3. Hybrid model according to Claim 1 or 2, having means for mapping an input vector of parameters (P1, P2, P3, P4, P5, ..., $P_i$) onto a subvector (PN1, PN2, PN3, ...,$PN_j$) and having means (4) for mapping the subvector onto corresponding inputs of the neural networks.

4. Hybrid model according to Claim 1, 2 or 3, in which the parameters are moulded-part parameters, recipe parameters, process parameters and/or machine parameters.

5. Hybrid model according to one of the preceding claims, in which the forecast value or values relates/relate to one or more of the following properties: rheological properties, processing properties, mechanical properties, thermal properties, properties of the processing time such as metering time, cooling time etc.

6. Hybrid model according to one of the preceding claims in which the output or outputs of the rigorous model or models relates/relate to one or more of the following properties, rheological properties, processing properties, mechanical properties, thermal properties, properties of the process time.

7. Hybrid model according to one of the preceding claims in which the neural network or networks outputs/output one or more of the following forecast values: melt viscosity, Carreau parameters, filling pressure, plastifying capacity, modulus of elasticity, yield stress, yield elongation, tearing stress, breaking strain, work to yield stress, work to breakage, nominal breaking strain, static friction, sliding friction, shrinkage, demoulding temperature, bending modulus, bending stress, peripheral fibre strain, resistance to breaking, density, sealing temperature, mass of moulded part.

8. Hybrid model according to one of the preceding claims, in which the rigorous model or models outputs/output one or more of the following calculated values relating to at least one of the following properties: cycle time, mould-filling time, injection time, metering time, cooling time, customer-specific filling pressure, Carreau melt viscosity, effective thermal conductivity, modulus of transverse elasticity, transverse tearing stress, transverse breaking strain.

9. Hybrid model according to one of the preceding claims, having a rigorous model for calculating the mould-filling time from the volume of the moulded part and the injection speed.

10. Hybrid model according to one of the preceding claims, having a rigorous model for calculating the mass of the moulded part from the volume of the moulded part and the density.

11. Hybrid model according to one of the preceding claims, having a rigorous model for calculating the effective thermal conductivity from the thickness, the sealing time, the mass temperature, the mould temperature, the sealing temperature.

12. Hybrid model according to one of the preceding claims, having a rigorous model for calculating the cooling time from the effective thermal conductivity, the thickness, the mass temperature, the mould temperature, the demoulding temperature.

13. Method for determining a property relating to the manufacture of an injection-moulded part having the following steps:

   - a number of parameters are selected,
   - the parameters are input into a hybrid model according to one of the preceding claims, and a forecast value and/or a calculated value relating to at least one of the properties are/is output.

**Revendications**

1. Modèle hybride destiné à la détermination de propriétés en rapport avec la fabrication d'une pièce moulée par injection, comprenant :

   - une première entrée (1) pour l'introduction de paramètres,
   - au moins un réseau neuronal (NN1, ... NN$_k$) pour l'introduction d'un ou de plusieurs des paramètres dans le réseau neuronal et comprenant une première sortie pour l'édition d'une valeur pronostique,
   - au moins un modèle rigoureux (R1, R2, R3, R4, R5, ...) ayant une autre entrée pour l'introduction d'un ou de plusieurs paramètres et/ou de la valeur pronostique et une seconde sortie pour l'édition d'une valeur calculée en rapport avec les propriétés,

   **caractérisé en ce qu'**il présente au moins un second modèle rigoureux, dont une entrée est en liaison avec au moins une sortie d'un autre modèle rigoureux pour l'introduction de la valeur calculée.

2. Modèle hybride suivant la revendication 1, comprenant une multiplicité de réseaux neuronaux (NN1, ... NN$_k$), pour l'édition d'un multiple correspondant de valeurs pronostiques.

3. Modèle hybride suivant la revendication 1 ou 2, comportant des moyens pour la représentation d'un vecteur d'entrée de paramètres (P1, P2, P3, P4, P5, ..., P$_i$) sur un nombre partiel (PN1, PN2, PN3, ..., PN$_j$) et des moyens (4) pour la représentation du nombre partiel sur des entrées correspondantes des réseaux neuronaux.

4. Modèle hybride suivant la revendication 1, 2 ou 3, dans lequel les paramètres sont des paramètres relatifs à la pièce moulée, des paramètres relatifs à la formulation, des paramètres relatifs au procédé et/ou des paramètres relatifs aux machines.

5. Modèle hybride suivant l'une des revendications précédentes, dans lequel la ou les valeurs pronostiques concernent une ou plusieurs des propriétés suivantes : propriétés rhéologiques, propriétés de mise en oeuvre, propriétés mécaniques, propriétés thermiques, propriétés en rapport avec la durée des opérations, par exemple temps de dosage, temps de refroidissement, etc.

6. Modèle hybride suivant l'une des revendications précédentes, dans lequel la ou les sorties du ou des modèles rigoureux concernent une ou plusieurs des propriétés suivantes : propriétés rhéologiques, propriétés de mise en oeuvre, propriétés mécaniques, propriétés thermiques, propriétés en rapport avec la durée des opérations.

7. Modèle hybride suivant l'une des revendications précédentes, dans lequel le ou les réseaux neuronaux délivrent l'une ou plusieurs des valeurs pronostiques suivantes : viscosité à l'état fondu, paramètre de Carreau, pression de remplissage, rendement de plastification, module d'élasticité, effort de tension, allongement, tension de rupture, allongement à la rupture, travail jusqu'à la tension de rupture, travail jusqu'à la rupture, allongement nominal à la rupture, frottement par adhérence, friction de glissement, retrait, température d'éjection, module de flexion, contrainte de flexion, allongement des fibres marginales, résistance à la flexion, densité, température de soudage, masse de la pièce moulée.

8. Modèle hybride suivant l'une des revendications précédentes, dans lequel le ou les modèles rigoureux délivrent une ou plusieurs valeurs calculées en rapport avec au moins l'une des propriétés suivantes : temps de cycle, temps de remplissage du moule, temps d'injection, temps de dosage, temps de refroidissement, pression de remplissage personnalisée, viscosité de Carreau à l'état fondu, conductivité thermique effective, module d'élasticité transversale, tension de rupture transversale, allongement de rupture transversale.

9. Modèle hybride suivant l'une des revendications précédentes, comprenant un modèle rigoureux pour le calcul du temps de remplissage du moule à partir du volume de la pièce moulée et de la vitesse d'injection.

10. Modèle hybride suivant l'une des revendications précédentes, comprenant un modèle rigoureux pour le calcul de la masse de la pièce moulée à partir du volume de la pièce moulée et de la densité.

11. Modèle hybride suivant l'une des revendications précédentes, comportant un modèle rigoureux pour le calcul de la conductivité thermique efficace à partir de l'épaisseur, du temps de soudage, de la température de la matière, de la température de l'outil, de la température de soudage.

**12.** Modèle hybride suivant l'une des revendications précédentes, comportant un modèle rigoureux pour le calcul du temps de refroidissement à partir de la conductivité thermique effective, de l'épaisseur, de la température de la matière, de la température de l'outil, de la température de démoulage.

**13.** Procédé de détermination d'une propriété en rapport avec la fabrication d'une pièce moulée par injection, comprenant les étapes suivantes :

- choix d'un nombre de paramètres,
- introduction des paramètres dans un modèle hybride suivant l'une des revendications précédentes et édition d'une valeur pronostique et/ou d'une valeur calculée en rapport avec au moins la propriété concernée.

# Fig. 1

EP 1 253 492 B1

Fig. 2

EP 1 253 492 B1

# Fig. 3

| Ermittlungen von Materialeigenschaften und Parametern des Herstellungsprozesses bei Variation von Eingangsparameter | ~ 30 |

↓

| Erzeugung einer Datenbank (Eingangsparameter;Materialeigenschaften, Parameter des Herstellungsprozesses) | ~ 31 |

# Fig. 4

| $m := 1$ | ~ 40 |

↓

| Training $NN_m$ mit relevanten Eingangsparametern bezüglich des Ausgangs des $NN_m$ | ~ 41 |

↓

| $m := m + 1$ | ~ 42 |

EP 1 253 492 B1